# EUROPÄISCHE PATENTSCHRIFT

(11) **EP 0 810 819 B1**
(45) Veröffentlichungstag und Bekanntmachung des Hinweises auf die Patenterteilung: **16.12.1998**
(21) Anmeldenummer: 96900873.9
(22) Anmeldetag: 31.01.1996
(51) Int. Cl.: A01G 9/10

(54) **PFLANZSUBSTRAT**
PLANT SUBSTRATE
SUBSTRAT POUR PLANTES

(30) Priorität: 23.02.1995 DE 29503009 U
(43) Veröffentlichungstag der Anmeldung: 10.12.1997
(73) Patentinhaber: Dedden, Lothar, 26160 Bad Zwischenahn (DE); Schlösser, Ulrich, 74397 Pfaffenhofen (DE)
(72) Erfinder: Schlösser, Ulrich, 74397 Pfaffenhofen (DE)
(74) Vertreter: Müller, Hans, Dipl.-Ing.
(86) Internationale Anmeldenummer: DE9600133
(87) Internationale Veröffentlichungsnummer: WO9625844

(56) Entgegenhaltungen:
- EP-A- 0 403 348
- EP-A- 0 476 828
- EP-A- 0 504 762
- WO-A-87/02327
- DE-U-29 503 009
- FR-A- 2 601 227
- FR-A- 2 691 875
- FR-A- 2 712 140
- GB-A- 2 252 028
- US-A- 5 241 783
- PATENT ABSTRACTS OF JAPAN vol. 14, no. 149 (C-0705) & JP,A,02 020224 (KAAMA)

## Beschreibung

### TECHNISCHES GEBIET

Die Erfindung betrifft ein mit Pflanzsubstrat gefülltes Pflanzkissen, in dem Topfpflanzen und insbesondere Balkonpflanzen gut gedeihen. Das Pflanzkissen kann mit Blumenerde, Torf, Torfgemischen oder sonstigen Pflanzgrundlagen und Substraten beliebiger Zusammensetzung gefüllt sein.

### STAND DER TECHNIK

Zum Bepflanzen von Pflanzbehältern wie zum Beispiel von Blumenkästen, die an Balkonwänden oder Balkongeländern vorhanden sind, ist es bekannt, dafür geeignete Blumenerde und dergleichen Pflanzsubstrate lose in die Blumenkästen zu füllen. Anschließend werden die jeweils gewünschten Pflanzen in die Blumenerde eingesetzt. Insbesondere der beim Befüllen der Pflanzbehälter verursachte Schmutz ist recht erheblich, was im Bereich von Balkonen höchst unerwünscht ist. Der gleiche Schmutzanfall tritt auch wieder beim Entleeren der Pflanzbehälter auf. Bei einjährigen Pflanzen, die oftmals zum Verschönern von Balkonen verwendet werden, ist dies doppelt ungünstig. Abgesehen vom Schmutzanfall besteht auch ein Gewichtsproblem. So wird die Blumenerde in relativ großen Verpackungseinheiten vom Markt zur Verfügung gestellt. Sofern diese relativ großen Verpackungseinheiten zu den jeweiligen Pflanzbehältern geschafft werden müssen, ist dies insbesondere für ältere Personen aus Gewichtsgründen nur schwer möglich. Im übrigen ist die Menge der Verpackungseinheit nicht mit der jeweils individuell benötigten Menge identisch. Dadurch bleibt Blumenerde übrig, was wirtschaftlich ungünstig ist.

### DARSTELLUNG DER ERFINDUNG

Ausgehend von diesem vorbekannten Stand der Technik liegt der Erfindung die Aufgabe zugrunde, eine verbesserte Möglichkeit zum Beflanzen von Pflanzbehältern, insbesondere Blumenkästen, anzugeben.

Diese Erfindung ist durch die Merkmale des Hauptanspruchs gegeben. Die Erfindung geht aus von der Erkenntnis, daß sich mit sogenannten Pflanzkissen, die im Inneren mit dem jeweils benötigten Pflanzsubstrat, wie beispielsweise der entsprechenden Blumenerde, gefüllt sind und die in ihren äußeren Formaten den verschiedenen Blumenkästen oder sonstigen Pflanzbehältern angeglichen sind, die vorstehend aufgeführten Nachteile vermeiden lassen.

Einerseits braucht jeweils nur die jeweils bestimmte Menge an Pflanzsubstrat erworben zu werden, die zum Befüllen des jeweiligen Pflanzbehälters erforderlich ist; andererseits ist der Befüllvorgang des Pflanzbehälters ohne großen Aufwand und insbesondere ohne Schmutzanfall zu bewerkstelligen, da das im Handel erworbene Pflanzkissen lediglich in den dafür geeigneten Blumenkasten oder sonstigen Pflanzbehälter eingesetzt zu werden braucht.

Die für das Pflanzkissen verwendete Kissenhülle ist erfindungsgemäß besonders schlecht lichtdurchlässig; läßt die Luft aber hindurchzirkulieren. Außerdem ist diese Hülle von außen nach innen wasserdurchlässig, von innen nach außen dagegen schwerer wasserdurchlässig. Diese Kissenhülle verhindert damit ein schnelles Austrocknen der Blumenerde, des Torfes, des Torfgemisches oder der sonstigen im Kissen vorhandenen Pflanzgrundlagen und Substrate. Auch eine Oberflächenaustrocknung der Blumenerde, die insbesondere bei Blumenkästen an höheren Balkonen besonders auftreten kann, ist nicht möglich; die Blumenerde ist nämlich geschützt in der Hülle vorhanden.

Dadurch, daß der Wind nicht direkt an der Blumenerde angreifen kann, wird neben der verhinderten Austrocknung der Blumenerde auch sichergestellt, daß die Blumenerde nicht aus dem Blumenkasten herausgeweht werden kann. Abgesehen von der dann im Blumenkasten fehlenden Erde ist daher auch eine Verschmutzung durch herausgewehte Blumenerde nicht zu befürchten.

An dem Pflanzkissen, dessen Hülle aus einer geeigneteten Kunststoff-Folie bestehen kann, kann nach einer Weiterbildung der Erfindung zum besseren Handhaben ein Traggriff fest angebracht sein. Dieser Traggriff kann aus dem gleichen Material wie die Kissenhülle bestehen.

Zum Einsetzen der Pflanzen kann an der Kissenhülle eine wiederverschließbare Öffnung ausgebildet sein. Diese Öffnung kann beispielsweise mit einem Klettverschluß beliebig oft verschlossen werden. Andererseits können in die Oberseite des Pflanzkissens auch Schlitze beziehungsweise Löcher eingeschnitten werden, durch die dann die Pflanzen, Pflanzsamen oder Pflanz-Stecklinge eingesetzt werden können. Durch diese Schlitze und Löcher hindurch können die Pflanzen problemlos aus dem Kissen herauswachsen. Die Schlitze und Löcher stellen dann die Orte dar, an denen Pflanzen in dem Pflanzbehälter beziehungsweise Blumenkasten vorhanden sein sollen. Die Schlitze oder Löcher können vom Benutzer an belieber Stelle angebracht werden.

Nach einer wesentlichen Weiterbildung der Erfindung kann die Kissenhülle auch die Gestalt einer Tüte haben. Die Tütenform hat den Vortei, daß durch ihre Öffnung Blumenerde problemlos eingefüllt werden kann. Im gefüllten Zustand füllt die Tüte dann den Innenraum des jeweils vorgesehenen Pflanzbehälters mehr oder weniger voll aus. Die Tütenform ermöglicht durch die ihr eigenen Längsfalten eine Muldenausbildung. Beim Bewässern des Pflanzkissens beziehungsweise dessen Inhalts kann sich in der Muldenausbildung ein Wasserbad ausbilden. Dadurch wird erreicht, daß das Wasser beim Begießen nicht außen an der Kissenhülle nutzlos vorbeiläuft; die Tüte wird daher vorteilsweise so in den Pflanzbehälter eingesetzt, daß ihre Muldenausbildung nach oben zeigt. Das Verschließen der Tüte kann durch ein- oder mehrmaliges Umschlagen der Tütenwandung, wie an sich bei Tüten bekannt, erfolgen. Es ist allerdings auch möglich, hier Verschlußhilfen, wie zum Beispiel Klettverschlüsse oder sonstige bekannte Hilfen vorzusehen, um ein unabsichtliches Öffnen der Tüte zu verhindern.

Die Kissenhülle hat damit mehrere Funktionen. Einerseits dient sie als Verpackung der jeweils benötigten Blumenerde oder des sonstigen erdartigen Pflanzgemenges. Andererseits dient sie als Schutz für das Pflanzgemenge innerhalb des jeweiligen Pflanzbehälters. So verhindert sie, daß Blumenerde aus dem Pflanzkissen herausfallen oder herausgeweht werden kann, andererseits verhindert sie auch ein schnelles Austrocknen von in der Blumenerde eingepflanzten Pflanzen. Dadurch muß weniger gegossen werden, als wenn die Blumenerde offen in Blumenkästen vorhanden wäre. Die Kissenhülle wirkt nämlich für Wasser wie eine einseitig durchlässige Membrane, da sie Wasser von außen nach innen, aber schwer von innen nach außen durchläßt. Da die Folie außerdem schwer lichtdurchlässig ist, wird der Unkrautwuchs behindert. Ein Pflanzenwuchs findet daher praktisch ausschließlich im Bereich der Schlitze und Löcher statt. Die Kissenhülle verhindert nämlich in ihrem verschlossenen Hüllenbereich ein Herauswachsen der Unkrautpflanzen aus dem Kissen heraus. Die Kissenhülle kann lediglich im Bereich der vorhandenen Schlitze und Öffnungen von Pflanzen durchwandert werden.

Weitere vorteilhafte Ausgestaltungen und Weiterbildungen der Erfindung sind dem nachstehenden Ausführungsbeispiel zu entnehmen.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:
- Fig. 1: eine perspektivische Ansicht eines Blumenkastens mit eingesetztem Pflanzkissen gemäß der Erfindung,
- Fig. 2: eine perspektivische Ansicht eines Pflanzkissens,
- Fig. 3: eine perspektivische Ansicht einer zweiten Ausführungsform eines Pflanzkissens,
- Fig. 4: eine perspektivische Ansicht einer dritten Ausführungsform eines zum Einsetzen in einem Blumenkasten vorbereitetes Pflanzkissen und
- Fig. 5: einen Schnitt durch den Blumenkasten nach Fig. 1.

### WEGE ZUM AUSFÜHREN DER ERFINDUNG

In einem handelsüblichen Blumenkasten 10 ist ein Pflanzkissen 12 eingelagert vorhanden. Das Pflanzkissen 12 füllt das Innere des Blumenkastens 10 mehr oder weniger vollständig aus. Der Blumenkasten 10 kann über Halterungen 14 in an sich bekannter Weise an einem Balkongeländer befestigt werden.

In die Oberseite 16 des Pflanzkissens 12 sind mehrere Schlitze 18 eingeschnitten. Dadurch können von oben durch die Schlitze 18 hindurch Stecklinge oder Samen in das Innere des Pflanzkissens 12 gesteckt werden.

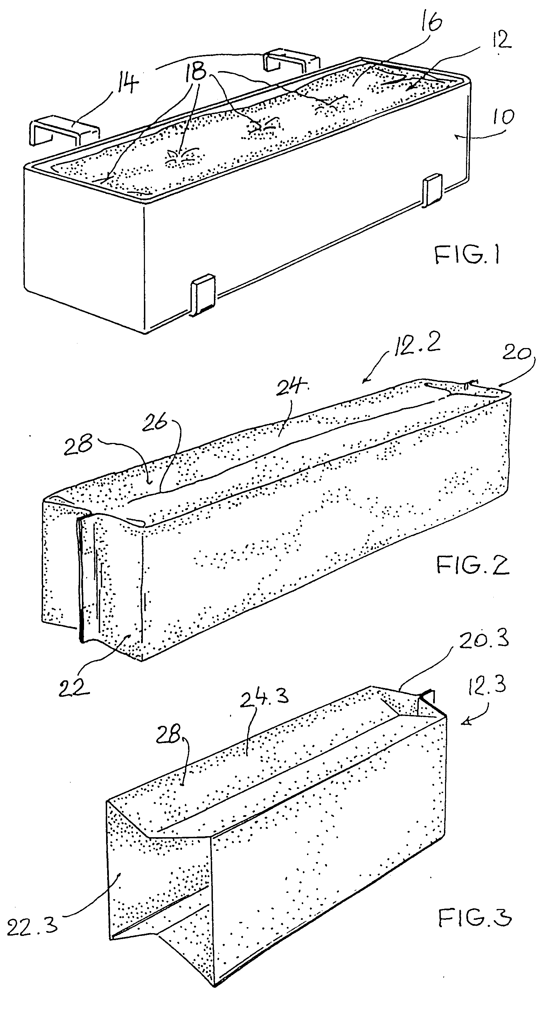

Das Pflanzkissen 12 besitzt beispielsweise eine in Fig. 2 dargestellte Kissenform 12.2. Dieses Kissen 12.2 stellt eine Art Tüte dar, deren rechte und linke Schmalseite 20, 22 einen an sich bekannten Tütenverschluß besitzen. Die nach oben ausgerichtete Seitenfläche 24, die der Oberseite 16 des Pflanzkissens 12 gemäß Fig. 1 entspricht, weist eine mit einer Längsfalte 26 versehene Einwölbung 28 auf. Diese Einwölbung 28 bildet eine Art Mulde und ermöglicht ein verbessertes Gießen der in dem Pflanzkissen 12 vorhandenen Pflanzen. In der Einwölbung 28 kann sich nämlich Gießwasser ansammeln und nacheinander durch die Oberseite 16 beziehungsweise Seitenfläche 24 hindurch in das Innere des Pflanzkissens hineindrängen. Dieses Gießwasser strömt damit nicht an der Außenseite des Kissens vorbei nach unten in den Bodenbereich des Blumenkastens 10. Im eingesetzten Zustand sind die wegstehenden Nähte der Tüte 12.2 an die entsprechenden Seitenflächen umgeklappt.

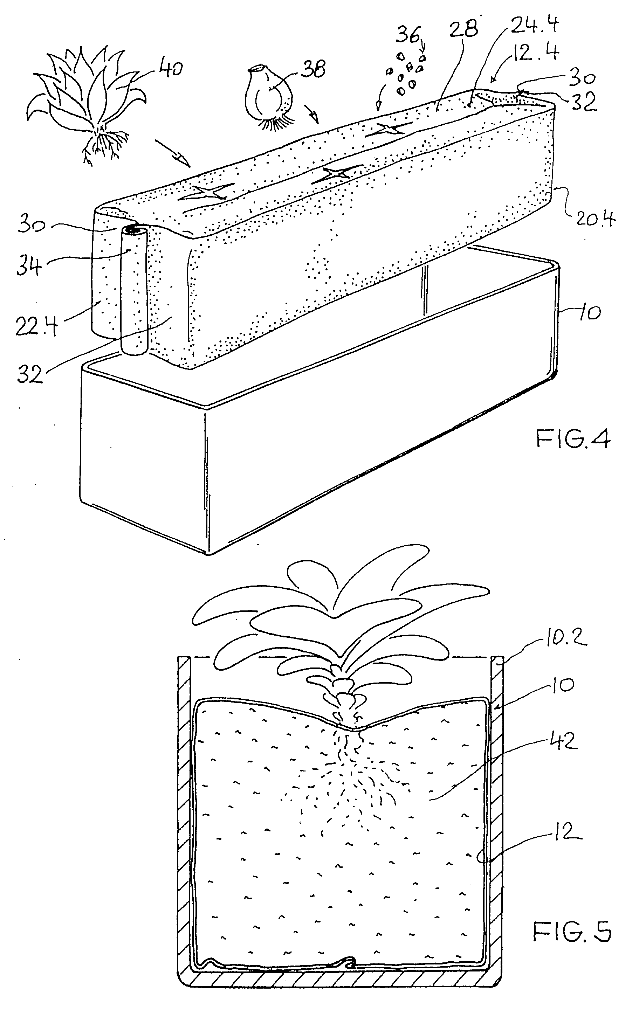

Bei der in Fig. 3 dargestellten Kissenform 12.3 ist im Gegensatz zur Kissenform 12.2 nur an der rechten Schmalseite 20.3 eine verschließbare Tütenöffnung ausgebildet. Die gegenüberliegende Schmalseite 22.3 stellt die an sich bekannte, verschlossene Bodenfaltung einer Tüte dar. Auch bei dieser Kissenform 12.3 ist auf der nach oben ausgerichteten Seitenfläche 24.3 wiederum die Einwölbung 28 ausgebildet.

Die in Fig. 4 dargestellte Kissenform 12.4 besitzt ebenfalls auf ihrer nach oben ausgerichteten Seitenfläche 24.4 besagte Einwölbung 28. Ihre rechte Schmalseite 20.4 ist in Art der in Fig. 2 und 3 dargestellten Verschlüsse verschlossen. Diese Verschlüsse sind durch flächiges Aufeinanderlegen der beiden Endbereiche 30, 32 der entsprechenden Seitenwandungen ausgebildet. An der gegenüberliegenden Schmalseite 22.4 sind die Seitenwandbereiche ineinandergeschlungen und stellen damit einen schlaufenartigen Verschluß 34 dar. Durch die in der Seitenfläche 24.4 eingeschnittenen, im vorliegenden Bei spielsfall sternartigen Schlitze 18 können Samenkörner 36, Blumenzwiebeln 38 beziehungsweise Pflanzen 40 eingepflanzt werden. Das Einpflanzen erfolgt vorzugsweise dann, wenn das Pflanzkissen in den Blumenkasten 10 bereits eingesetzt ist.

In Fig. 5 ist ein mit Blumenerde 42 gefülltes Pflanzkissen 12 dargestellt. Dieses Pflanzkissen 12 füllt den Innenraum des Blumenkastens 10 mehr oder weniger vollständig aus. Lediglich im oberen Randbereich 10.2 des Blumenkastens 10 ist ein Freiraum vorhanden. Dadurch ist das Pflanzkissen 12 optisch etwas versteckt im Blumenkasten 10 eingelagert.

## Patentansprüche

1. Pflanzsubstrat (42) in Form eines erdartigen Gemenges für Blumenkästen (10), welches in einem Kissen (12) eingefüllt vorhanden ist, dessen Kissenhülle aus einer Kunststoff-Folie besteht, wobei die Form des Kissens (12) dem Innenquerschnitt des Blumenkastens (10) derart angepaßt ist oder anpaßbar ist, daß das Kissen (12) größenmäßig in dem Blumenkasten (10) Platz findet,
**dadurch gekennzeichnet**, daß
- die Kissenhülle einerseits schwer lichtdurchlässig, andererseits von außen nach innen wasserdurchlässig und von innen nach außen schwer wasserdurchlässig ist.

2. Pflanzsubstrat nach Anspruch 1,
**dadurch gekennzeichnet**, daß
- ein Traggriff an dem Kissen (12) befestigt ist.

3. Pflanzsubstrat nach einem der vorstehenden Ansprüche,
**dadurch gekennzeichnet**, daß
- das Kissen (12) zumindest eine wiederverschließbare Öffnung besitzt.

4. Pflanzsubstrat nach Anspruch 3,
**dadurch gekennzeichnet**, daß
- ein Klettverschluß für eine Öffnung in dem Kissen (12) vorhanden ist.

5. Pflanzsubstrat nach einem der vorstehenden Ansprüche,
**dadurch gekennzeichnet**, daß
- das Kissen (12) in Art einer Tüte ausgebildet ist.

6. Pflanzsubstrat nach einem der vorstehenden Ansprüche,
**dadurch gekennzeichnet**, daß
- das Kissen (12) den Innenraum des Blumenkastens (10) mehr oder weniger vollständig ausfüllt.

## Claims

1. Planting substrate (42) in the form of a soil-like mixture for flower boxes (10), which is available filled in a bag (12), the bag skin of which consists of a plastic foil, the shape of the bag (12) being adapted or adaptable to the inner cross-section of the flower box (10) in such a manner that the bag (12) has room in the flower box (10) in terms of size, characterized in that the bag skin on the one hand has poor transparency and on the other hand is water-permeable from outside to inside and difficult for water to permeate from inside to outside.

2. Planting substrate according to Claim 1, characterized in that a carrying handle is fastened to the bag (12).

3. Planting substrate according to one of the preceding claims, characterized in that the bag (12) has at least one reclosable opening.

4. Planting substrate according to Claim 3, characterized in that a touch-and-close fastener is present for an opening in the bag (12).

5. Planting substrate according to one of the preceding claims, characterized in that the bag (12) is designed in the manner of a gusseted bag.

6. Planting substrate according to one of the preceding claims, characterized in that the bag (12) fills the inner space of the flower box (10) essentially completely.

## Revendications

1. Substrat (42) pour plantes sous la forme d'un mélange semblable à de la terre pour bacs à fleurs (10), lequel est présent comme remplissage d'un coussin (12) dont l'enveloppe est faite d'un film de matière plastique, la forme du coussin (12) étant adaptée ou adaptable à la section droite intérieure du bac à fleurs (10), de manière que le coussin (12), de par sa grandeur, trouve sa place dans le bac à fleurs (10), caractérisé en ce que l'enveloppe du coussin laisse d'une part passer la lumière difficilement et laisse d'autre part passer l'eau de l'extérieur vers l'intérieur, mais la laisse passer difficilement de l'intérieur vers l'extérieur.

2. Substrat pour plantes selon la revendication 1, caractérisé en ce qu'une poignée pour porter le coussin (12) est fixée à celui-ci.

3. Substrat pour plantes selon une des revendications précédentes, caractérisé en ce que le coussin (12) possède au moins une ouverture susceptible d'être refermée.

4. Substrat pour plantes selon la revendication 3, caractérisé en ce qu'une fermeture de type "Velcro" est présente pour une ouverture du coussin (12).

5. Substrat pour plantes selon une des revendications précédentes, caractérisé en ce que le coussin (12) est réalisé à la façon d'un sac ayant notamment la configuration d'un sac en papier.

6. Substrat pour plantes selon une des revendications précédentes, caractérisé en ce que le coussin (12) remplit plus ou moins complètement l'espace intérieur du bac à fleurs (10).
